# EUROPÄISCHE PATENTSCHRIFT

(11) **EP 1 119 436 B1**
(45) Veröffentlichungstag und Bekanntmachung des Hinweises auf die Patenterteilung: **17.09.2003**
(21) Anmeldenummer: 99919072.1
(22) Anmeldetag: 13.03.1999
(51) Int. Cl.: B23K 26/02

(54) **VERFAHREN ZUR MATERIALBEARBEITUNG MIT PLASMA INDUZIERENDER HOCHENERGIESTRAHLUNG**
METHOD FOR SHAPING MATERIALS WITH PLASMA-INDUCING HIGH-ENERGY RADIATION
PROCEDE DE TRAITEMENT DE MATIERE A L'AIDE D'UN RAYONNEMENT HAUTE ENERGIE INDUISANT UN PLASMA

(30) Priorität: 07.10.1998 DE 19846191
(43) Veröffentlichungstag der Anmeldung: 01.08.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: KRATZSCH, Christian, D-40474 Düsseldorf (DE); SCHULZ, Wolfgang, D-52379 Langerwehe (DE); ABELS, Peter, D-52477 Alsdorf (DE)
(74) Vertreter: Draudt, Axel Hermann Christian, Dipl.-Ing.
(86) Internationale Anmeldenummer: DE9900697
(87) Internationale Veröffentlichungsnummer: WO00020158

(56) Entgegenhaltungen:
- DE-A- 19 618 045
- DE-C- 4 434 409
- DE-C- 19 741 329

## Beschreibung

Die Erfindung bezieht sich auf ein Verfahren zur Materialbearbeitung mit Plasma induzierender Hochenergiestrahlung, insbesondere Laserstrahlung, bei dem die momentane Intensität der Plasmastrahlung an mehreren Stellen einer Dampfkapillaren gemessen wird.

Ein Verfahren mit den vorgenannten Merkmalen ist aus der DE 197 41 329 C1 bekannt. Dabei werden momentane Plasmaintensitäten an mindestens zwei Meßstellen parallel zur Achse der induzierenden Strahlung gemessen. Die gemessenen Plasmaintensitäten werden vorbestimmten Kapillargeometriegrößen zugeordnet, also beispielsweie der Tiefe der Dampfkapillaren, und es erfolgt eine Steuerung der Materialbearbeitung in Abhängigkeit von diesen Kapillargeometriegrößen. Damit wird eine direkte Beziehung der beobachteten Plasmaintensität zur Ausbildung der Dampfkapillaren ausgenutzt, um mit einer verbesserten direkten Prozeßbeobachtung Prozeßfehler zu verhindern. Es ist nun entdeckt worden, daß dieses Verfahren nicht anwendbar ist, wenn die Tiefe der Dampfkapillaren mit deren Breite vergleichbar wird. Der auswertbare Zusammenhang zwischen der Plasmaintensität und der Eindringtiefe ist nicht mehr gegeben.

Demgegenüber liegt der Erfindung die Aufgabe zugrunde, ein Verfahren mit den eingangs genannten Merkmalen so zu verbessern, daß eine Steuerung der Materialbearbeitung auch dann noch durch direkte Prozeßbeobachtung beeinflußt werden kann, wenn die Tiefe der Plasmakapillaren mit deren Breite vergleichbar wird.

Diese Aufgabe wird dadurch gelöst, daß Formen zweier voneinander distanzierter Intensitätsmaximumbereiche der Plasmastrahlung, oder einer anderen aus der Dampfkapillaren emittierten elektromagnetischen Strahlung, und eines zwischen diesen beiden Extremwertbereichen ausbildbaren Minimumbereichs meßtechnisch erfaßt werden, daß meßtechnisch erfaßte Formen der Extremwertbereiche mit vorbestimmten Bereichsformen verglichen werden, und daß eine Steuerung der Materialbearbeitung in Abhängigkeit von Abweichungen der erfaßten Formen von den vorbestimmten Bereichsformen erfolgt.

Für die Erfindung ist von Bedeutung, daß eine ausschließlich flächenmäßige Auswertung der momentanen Plasmaintensitäten des Erfassungsbereichs erfolgt. Statt der Plasmastrahlung kann auch eine andere emittierte elektromagnetische Strahlung ausgewertet werden, zum Beispiel emittierte Wärmestrahlung. Aus dem insgesamt meßtechnisch erfaßten Bereich werden Formen vorbestimmter Bereiche erfaßt und ausgewertet. Die vorbestimmten Bereiche sind in erster Linie Intensitätsmaximumbereiche. Solche Intensitätsmaximumbereiche tauchen seitlich von der Laserstrahlachse auf. Sie sind etwa auf einer zur Laserstrahlachse senkrechten Geraden angeordnet und kennzeichnen einen vorlaufenden Bereich am Rand der Dampfkapillaren sowie einen nachlaufenden Bereich am Rand derselben Dampfkapillaren. Je nach Durchführung des Verfahrens kann sich zwischen den beiden ein meßtechnisch erfaßbarer Minimumbereich ausbilden. Auch dieser Minimumbereich kann hinsichtlich seiner Form mit einer vorbestimmten Bereichsform verglichen werden und je nach Vergleichsergebnis aller Extremwertbereiche kann eine Steuerung der Materialbearbeitung erfolgen. Da das Verfahren ausschließlich unter Auswertung von Flächenformen durchgeführt wird, ist es von einer meßtechnischen Erfassung der Eindringtiefe der Dampfkapillaren unabhängig und infolgedessen insbesondere für dünne Werkstücke geeignet. Es kann also eine Materialbearbeitung mit Hochenergiestrahlung unter on-line Qualitätsüberwachung durchgeführt werden. Das ist insbesondere beim Verschweißen von dünnen und ungleich dicken Werkstücken möglich, wie bei sogenannten "tailored blanks". Hierbei erfordern die unterschiedliche Dicke und Beschichtung sowie unterschiedliche Materialeigenschaften besondere Maßnahmen bei der Verfahrensführung. Ein bekanntes, charakteristisches Merkmal beim Schweißen ungleich dicker Werkstücke ist der seitliche Versatz der Fügekanten und der Schweißnahtmitte. Selbst wenn der Laserstrahl ideal entlang einer Fügekante verläuft, bildet sich die Schweißnaht mit seitlichem Versatz zu den vorbereiteten Fügekanten aus. Dieser Versatz muß einen vorbestimmten Wert annehmen. Liegt die Schweißnaht weiter in dem dickeren Werkstück, so erhöht sich das aufgeschmolzene Volumen und der Fügespalt kann gut aufgefüllt werden. Liegt die Schweißnaht zu weit im dicken Werkstück, so wird das dünne Werkstück nicht ausreichend angeschmolzen. Liegt die Schweißnaht weiter im dünneren Werkstück, so verringert sich das insgesamt aufgeschmolzene Volumen und das dickere Werkstück wird nicht über seine gesamte Dicke angeschmolzen. Unerwünschte Einbrandkerben sind die Folge. Die vorbeschriebenen unerwünschten Verfahrensabläufe können mit den vorbeschriebenen Verfahrensschritten gut beherrscht werden, da sich unterschiedlich angeschmolzene Werkstücke in unterschiedlichen Formen der Extremwertbereiche zeigen.

Das Verfahren kann so durchgeführt werden, daß eine Steuerung der Materialbearbeitung bei einer Abweichung der Form des Minimumbereichs von einer vorbestimmten kreisähnlichen Bereichsform erfolgt. Ein solches Verfahren ist insbesondere für den Fall des Auftretens eines meßtechnisch erfaßbaren Minimumbereichs von Bedeutung. Abweichungen von kreisähnlichen Bereichsformen können Schweißfehler bewirken und werden andererseits dazu verwendet, der Steuerung der Materialbearbeitung zu dienen.

Eine Weiterbildung des Verfahrens zur Vermeidung der vorbeschriebenen Fehlerhaftigkeit kann dahingehend durchgeführt werden, daß eine Steuerung der Materialbearbeitung erfolgt, wenn in den Übergangsbereichen der Form des Minimumbereichs zu den Formen der Maximumbereiche scharfe Bereichsgrenzen vorhanden sind. An den scharfen Begrenzungen der Form des Minimumbereichs zu den helleren Maximumbereichen liegt eine vom Laserstrahl noch nicht angeschmolzene Fügekante vor. Es kann also bei nicht zu großen Werten für den Fügespalt beispielsweise ein Bereich der Extremwertbereiche von der vorbestimmten Bereichsform abweichen. Beispielsweise ist ein Maximumbereich unterbrochen, also im Bereich einer Fügekante dunkler. Der zweite Maximumbereich kann dann noch heller sein und so zu erkennen geben, daß die Schweißung noch auf voller Breite der Schweißnaht vorliegt. Dann kann mit dem Schweißverfahren der Fügespalt noch überbrückt werden. Die festgestellten Abweichungen von den vorbestimmten Werten bewirken jedoch Schweißfehler, Einbrandkerben oder sogar einen Nahteinfall, bei dem zuwenig aufgeschmolzenes Material vorhanden ist.

Wird das Verfahren so durchgeführt, daß eine Steuerung der Materialbearbeitung erfolgt, wenn Abweichungen der Formen eines in Vorschubrichtung eines relativ zur Laserstrahlung bewegten bearbeiteten Werkstücks vorlaufenden Intensitätsmaximumbereichs und eines nachlaufenden Maximumbereichs von vorbestimmten Bereichsformen vorliegen. So kann eine Verbesserung des Schweißergebnisses erreicht werden, wenn die Werte für den Fügespalt zu groß sind, wobei nicht nur der vorlaufende Intensitätsmaximumbereich ausgewertet wird, sondern zugleich auch der nachlaufende Maximumbereich. Durch geeignete Steuerung der Materialbearbeitung verbessert man also auch dann das Schweißergebnis, wenn beide Maximumbereiche von einem Minimumbereich entlang der Fügekante unterbrochen sind.

Eine hinreichende Schweißgenauigkeit läßt sich auch dadurch erreichen, daß eine Steuerung der Materialbearbeitung erfolgt, wenn die Formabweichung eine vorbestimmte Differenzgröße und/oder eine vorbestimmte Dauer überschreitet. Es ist also erforderlich, daß die Abweichungen von vorbestimmter Größe sind und für eine vorbestimmte Zeit erfaßt werden. Sonst unterbleiben Eingriffe in das Schweißverfahren, um unnötige Belastungen der Steuereinrichtung zu vermeiden.

Eine weitere Möglichkeit zur Ausbildung des Verfahrens kann sich dahingehend ergeben, daß eine Steuerung der Materialbearbeitung in Abhängigkeit von Winkelstellungen erfolgt, die eine durch die Intensitätsmaximabereiche gelegte Gerade im Bezug auf eine Vorschubrichtung eines relativ zur Laserstrahlung bewegten bearbeiteten Werkstücks einnimmt. Winkelstellungen einer Geraden lassen sich mit geringem meßtechnischen Aufwand erfassen und mit geringem rechnerischen Aufwand für die Materialbearbeitung einsetzen.

Eine weitere Möglichkeit zu verfahren ist es, daß eine Steuerung der Materialbearbeitung erfolgt, wenn in einem die Formen der Extremwertbereiche meßtechnisch erfassenden Meßbereich sporadisch auftretende, intensiv strahlende Lichtflecke ermittelt werden. Solche Lichtflecke weisen auf Schweißspritzer hin, die das Volumen der Schweißnaht mindern. Die mit solchen Spritzern verbundenen Turbulenzen können zu unregelmäßigen Nahtraupen führen.

Die vorbeschriebenen Verfahren können dahin ausgestaltet werden, daß eine Steuerung der Materialbearbeitung unterschiedlich dicker Werkstücke erfolgt, wenn der Minimumbereich den in Vorschubrichtung vorlaufenden und/oder den nachlaufenden Maximumbereich verformt. Eine derartige Verformung kann insbesondere auftreten, wenn der Minimumbereich infolge einer guten Durchschweißung prägnant ausgebildet ist. In diesem Fall bedeutet die Verformung des vorlaufenden Maximumbereichs eine unerwünschte Bahnabweichung der Laserstrahlung in das dünnere Werkstück. Eine Verformung des nachlaufenden Maximumbereichs bedeutet hingegen eine unerwünschte Bahnabweichung der Laserstrahlung in das dickere Werkstück. Beide gegebenenfalls ungewünschten Abweichungen können ausgesteuert werden.

Das Verfahren kann auch so durchgeführt werden, daß eine Steuerung der Materialbearbeitung erfolgt, wenn innerhalb eines in Vorschubrichtung vorlaufenden Maximumbereichs zwei beidseitig einer Fügebahn vorhandene Submaxima von einer vorbestimmten Symmetrie abweichen. Symmetrische Submaxima des vorlaufenden Maximumbereichs treten insbesondere bei Blindschweißungen auf, bei denen also kein Fügespalt zwischen den Fügekanten vorhanden ist und gleichartige Materialien bearbeitet werden. Ein vorhandener Fügespalt führt hingegen zu einer Asymmetrie, die jedoch in bestimmten Fällen ebenfalls als vorbestimmte Symmetrie angesehen werden kann.

Mit den vorbeschriebenen Verfahrensschritten kann erreicht werden, daß eine gute Schweißung dünner Werkstücke vorliegt. Eine solche gute Schweißung blechförmiger Werkstükke oder dünner Bleche liegt dann vor, wenn die Fügekanten und die entstehende Schweißnaht einen vorbestimmten Wert für den seitlichen Versatz aufweisen, wenn der Fügespalt von dem aufgeschmolzenen Material vollständig aufgefüllt und damit verbindend überbrückt werden kann, wenn mindestens eine Durchschweißung vorliegt oder besser, wenn die Oberraupe und die Unterraupe der entstehenden Schweißnaht vorbestimmte Werte für Ihre Breiten aufweisen, und wenn die Formhaltigkeit während der gesamten Schweißung eingehalten werden kann. Diese Merkmale für eine gute Schweißung sind in Qualität und in Quantität auf die relative Lage und die Form der drei vorbeschriebenen Bereiche in der Intensität abzubilden. Die Merkmale liegen in vollem Umfang vor, wenn die Form aller drei Bereiche eine vorbestimmte Form aufweist, wenn eine abgerundete Form des dunklen dritten Bereichs vorliegt, nämlich des Minimumbereichs, wenn der dunkle Bereich sichtbar ist, wenn der helle erste Bereich (Oberraupe) und der dunkle dritte Bereich (Unterraupe) einen vorbestimmten Wert für Ihre Breiten einhalten, und wenn zeitlich und räumlich Abweichungen klein bleiben. Im Hinblick auf die Sichtbarkeit des dunklen Bereichs ist zu bemerken, daß eine Durchschweißung leider auch schon dann vorliegen kann, wenn der dunkle dritte Bereich noch nicht sichtbar ist. Hier ist die Sichtbarkeit des dritten dunklen Bereichs nur notwendige Vorraussetzung für eine Durchschweißung. Allerdings ist die Durchschweißung sicher detektiert, wenn der dunkle dritte Bereich sichtbar ist.

Die Erfindung wird anhand der Darstellungen der Zeichnungen erläutert. Es zeigt:
- Fig.1: eine schematische Darstellung einer von einem Bildgeber erzeugten Helligkeitsverteilung im Bereich einer Dampfkapillaren für den Fall einer Blindschweißung,
- Fig.2: eine der Fig.1 entsprechende Darstellung für den Fall einer Schweißung ungleich dicker Werkstücke mit zwischen ihnen befindlichem Spalt,
- Fig.3a bis Fig.3c: schematisierte Darstellungen von Helligkeitsverteilungen im Bereich einer Dampfkapillaren bei unterschiedlichen Verfahrenszuständen,

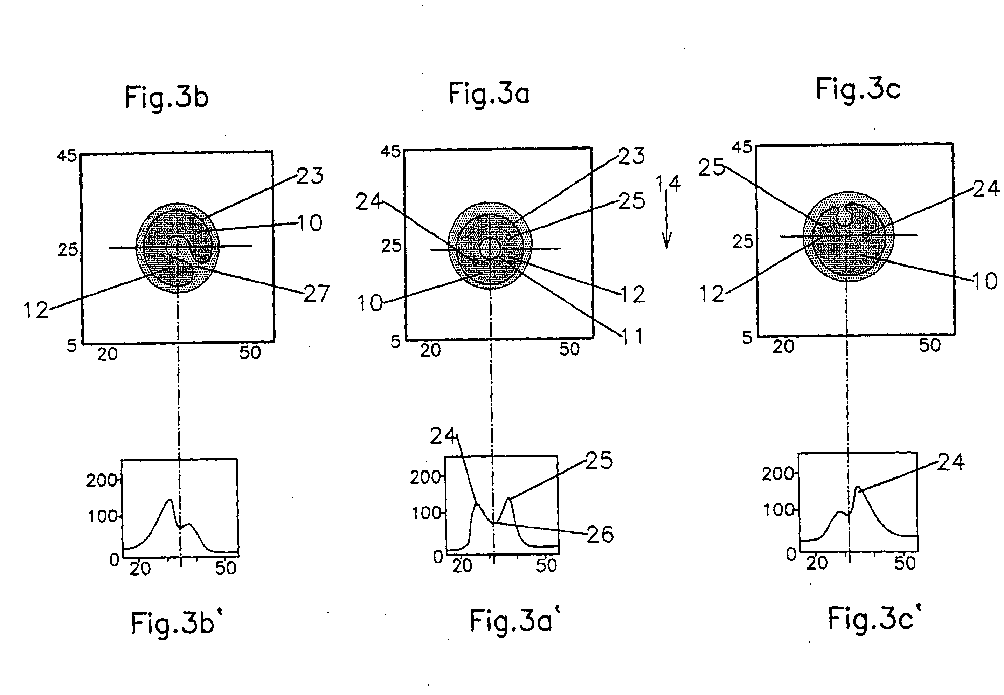

- Fig.3a' bis 3c': den Fig.3a bis 3c zuzuordnende Intensitätsverteilungen über den Querschnitt der in den Fig.3a bis 3c eingezeichneten Koordinatenlinien,

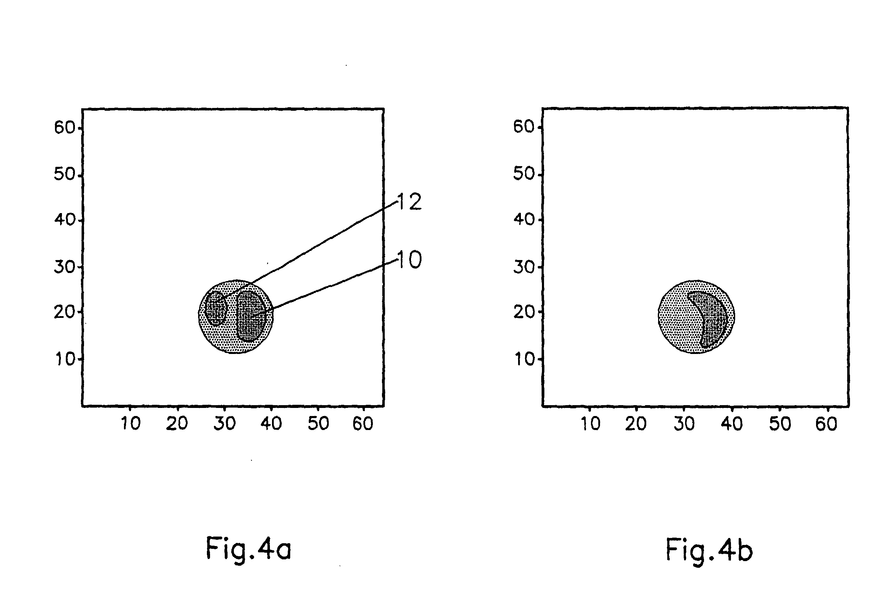

- Fig.4a, 4b: schematisierte Darstellungen zur Erkennung von Spalten zwischen Werkstücken,

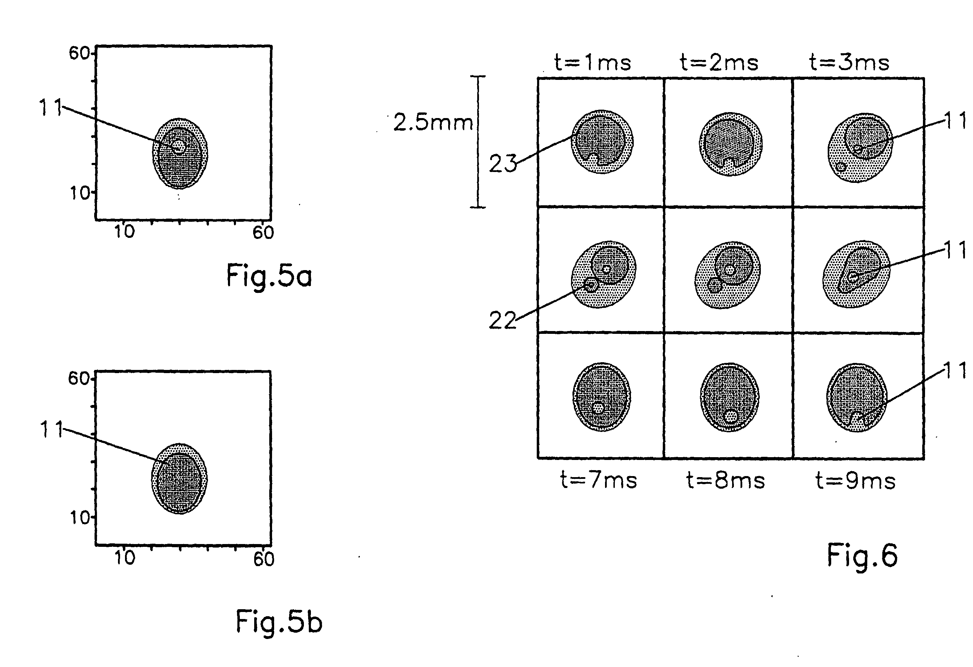

- Fig.5a, 5b: schematisierte Darstellungen zur Erkennung von guter und schlechter Durchschweißung, und
- Fig.6: schematisierte Darstellungen zur Erkennung von Spritzerbildung.

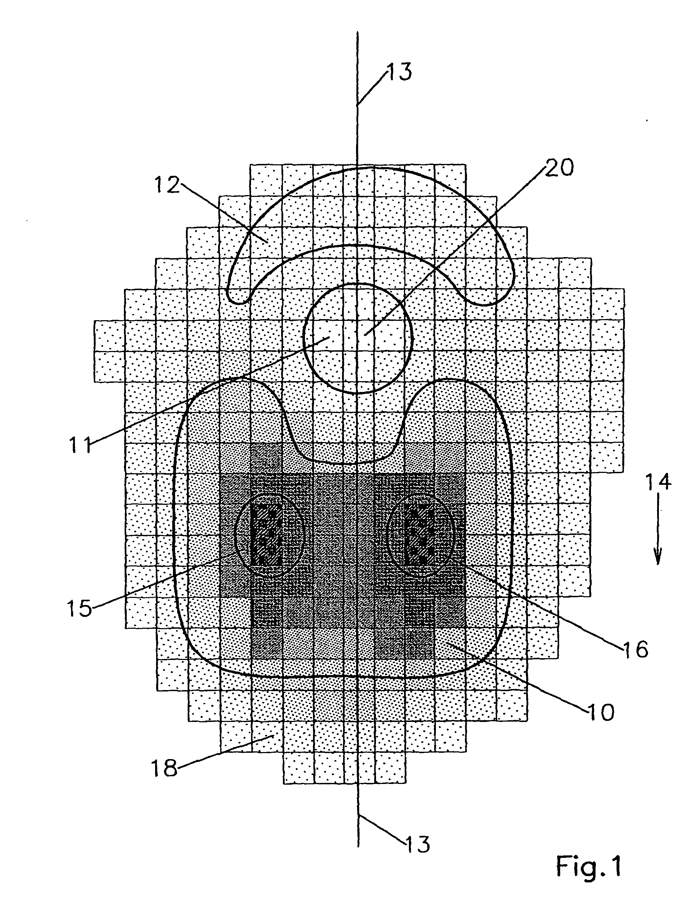

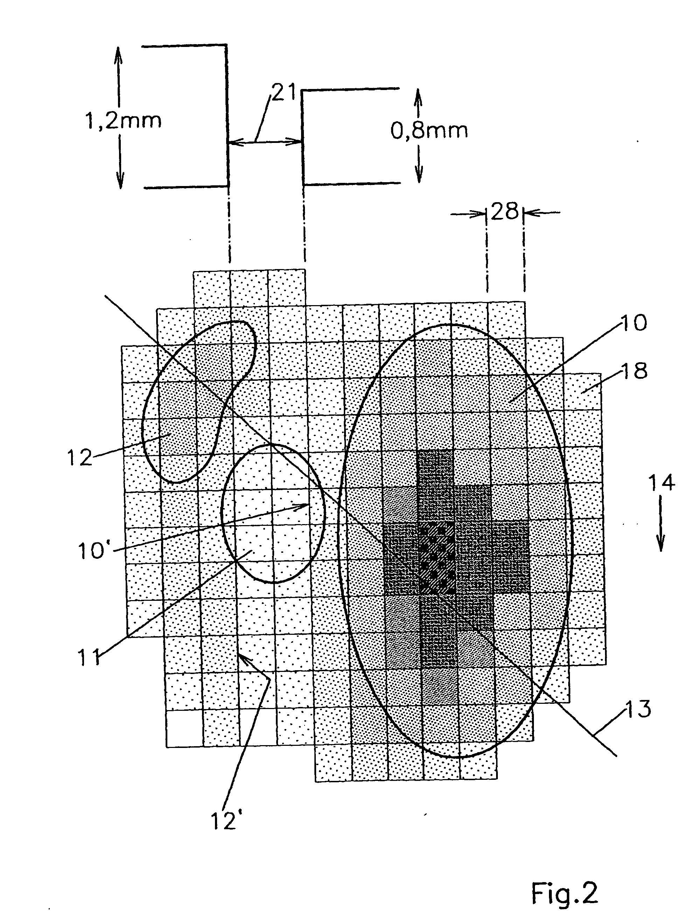

Sämtliche Figuren zeigen schematisierte Darstellungen eines Bildgebers. Als Bildgeber ist eine CCD-Kamera geeignet, die einen vorbestimmten Meßbereich erfaßt, der die Dampfkapillare einschließt. Für den erfaßten Meßbereich sind in den Fig.1 und 2 die einzelnen Pixel 18 erkennbar. Je dichter gepunktet ein Pixel dargestellt ist, desto größer ist die Intensität der Plasmastrahlung, die von der dem Pixel 18 zuzuordnenden Sensorzelle der CCD-Kamera erfaßt wurde. In den Fig.3 bis 6 wurde auf eine pixelweise Darstellung verzichtet.

Sämtliche Figuren beziehen sich auf eine Prozeßüberwachung beim Schweißen von tailored blanks. Tailored blanks werden aus dünnen Blechen hergestellt, die im Bereich der Schweißnaht entweder gleichdick oder unterschiedlich dick sind. Fig. 1 zeigt eine Darstellung für eine Blindschweißung in Vorschubrichtung 14. In diesem Fall befindet sich zwischen den Fügekanten der nicht dargestellten zu verschweißenden Werkstücke kein Fügespalt. Fig.1 zeigt, daß dann die von beiden Werkstücken gebildete Fügelinie mit einer Geraden 13 gleichliegt, die symmetrisch durch zwei Intensitätsmaximumbereiche 10,12 gelegt ist. Die Bereiche 10,12 liegen beidseitig der Laserstrahlachse, die sich etwa an der Stelle 20 befindet. Dementsprechend ist der erste Bereich 10 vorlaufend, während der zweite Bereich 12 nachlaufend zur Laserstrahlachse 20 angeordnet ist. Der erste helle Bereich 10 und der zweite helle Bereich 12 geben die vorlaufende und nachlaufende Position und Ausdehnung des Randes der Dampfkapillaren an und nicht die Orte mit der größten Eindringtiefe. Dort, wo die größte Eindringtiefe auftritt, also etwa im Bereich der Laserstrahlachse 20, kann ein dritter Bereich sichtbar werden, nämlich ein dunkler dritter Bereich 11 mit besonders kleinen Werten für die Intensität.

Für die Auswertung ist noch von Bedeutung, daß der hellste Bereich 10 vor der Laserstrahlachse 20 eine Substruktur aufweist, die aus zwei räumlich begrenzten Submaxima 15,16 rechts vor und links vor der Laserstrahlachse 20 beziehungsweise symmetrisch zur Geraden 13 besteht. Nur wenn sich kein Fügespalt zwischen den Fügekanten befindet und gleichartige Materialien bearbeitet werden (Blindschweißen), liegt diese Symmetrie bezüglich der Vorschubrichtung 14 auch in der Intensität des ersten Bereichs 10 vor. In Abhängigkeit von der Breite eines Fügespalts, von der Vorschubgeschwindigkeit, von den unterschiedlichen zu fügenden Materialdicken und von den Materialeigenschaften muß ein vorbestimmter Wert für die Asymmetrie des ersten Bereichs 10 eingestellt werden, um eine gute Schweißung zu erzielen.

In Fig.2 ist oben die Anordnung zweier Werkstücke skizziert, die unterschiedlich dick sind, nämlich einerseits 1,2 mm und andererseits 0,8 mm. Beide Werkstücke besitzen einen horizontalen Abstand voneinander, so daß ein entsprechender Fügespalt 21 gebildet ist. Der Fügespalt, der sich üblicherweise in dem Bereich von 0 bis 0,3 mm bewegt, ist in dem dargestellten Fall etwa 120 µm, wie an einer Pixelbreite von 60 µm zu erkennen ist, die mit 28 bezeichnet wurde. Es sind wiederum zwei Intensitätsmaximumbereiche 10,12 vorhanden und zwischen beiden befindet sich ein Minimumbereich 11. Alle Bereiche 10,11,12 liegen etwa auf einer Geraden 13, die im Bezug auf eine Fügebahn, beziehungsweise auf den Verlauf des Spalts 21, beziehungsweise die Vorschubrichtung 14 winkelig angeordnet ist. Die Winkelstellung der Geraden 13 ist vor allem abhängig von der Weite des Spalts 21 und der Bemessung der Werkstücke und deren Werkstoff. Die Winkelstellung der Geraden 13 im Bezug auf die Vorschubrichtung 14 kann dementsprechend benutzt werden, um die Materialbearbeitung zu steuern.

Eine Besonderheit in Fig.2 ist, daß der dritte dunkle Bereich, also der Minimumbereich 11, Übergangsbereiche mit scharfen Bereichsgrenzen 10',12' aufweist. Diese deuten darauf hin, daß eine anormale Bearbeitung stattfindet. An diesen Stellen liegt eine vom Laserstrahl noch nicht ausreichend angeschmolzene Fügekante vor.

Zusammenfassend ergibt sich folgendes: Wesentlich ist eine Auswertung momentaner Plasmaintensitäten auf drei zu unterscheidende räumliche Bereiche 10,11,12. Diese Bereiche treten entweder deutlich voneinander getrennt auf, oder einer der Bereiche fehlt völlig. Aus der Form und der relativen Lage dieser räumlichen Bereiche mit vorbestimmten Werten für die Intensität lassen sich fast alle der genannten Bearbeitungsmerkmale während der Bearbeitung bestimmen. Die Beobachtungsebene ist definiert durch Orte, an denen lichtempfindliche Pixel, zum Beispiel einer CCD-Kamera angeordnet sind. In der Beobachtungsebene liegen räumlich verteilte Intensitätswerte vor: zwei Maxima und ein relatives Minimum. Diese Extremwerte liegen näherungsweise auf einer Geraden 13, die gegenüber der Vorschubrichtung 14 geneigt sein kann. Jedem Extremwert wird ein räumlich ausgedehnter Bereich zugeordnet, der diesen Extremwert enthält. Das absolute Maximum liegt immer in dem ersten Bereich 10, der immer in Vorschubrichtung vor der Laserstrahlachse 20 angeordnet ist. Das zweite Maximum liegt im zweiten Bereich 12, der immer hinter der Laserstrahlachse 20 folgt. Wenn das relative Minimum auftritt, dann liegt es immer in dem dunkleren dritten Bereich 11 zwischen den beiden anderen.

Die folgenden Figuren zeigen Darstellungen ähnlich denen der Fig.1,2 zur Erläuterung von Verfahrensweisen beim Schweiβen, die fehlerhaft oder zumindest steuerungsbedürftig sind. Für sämtliche Beispiele gilt die in Fig.2 dargestellte Anordnung zweier Werkstücke von 1,2 beziehungsweise 0,8 mm mit einem dazwischen angeordneten Spalt 21. Die vertikale Koordinate y entspricht der Vorschubrichtung 14 und die horizontale Koordinate x ist quer zur Vorschubrichtung 14 orientiert. Innerhalb eines Meßbereichs 23 ist ein Minimumbereich 11 erkennbar und es sind Maxima 24,25 vorhanden, die den in Fig.1,2 beschriebenen Intensitätsmaximumbereichen 10,12 zugeordnet sind. Fig. 3a' zeigt die Intensität in Abhängigkeit von der Querkoordinate x in Zuordnung zum Minimum 26, das sich etwa an der Koordinate y = 22 befindet. Die symmetrische Anordnung der Maximumbereiche 10,12 beziehungsweise der Maxima 24,25 im Bezug aufeinander und auf den Minimumbereich 11 läßt erkennen, daß keine Bahnabweichung der Laserstrahlachse von der Nahtmitte vorhanden ist.

Gemäß Fig.3b ist der erste helle Bereich 10 bei 27 im Bereich der Fügekante 23 unterbrochen. Demgemäß ist das Maximum von nur geringer Ausprägung. Andererseits ist aber der zweite Intensitätsmaximumbereich 12 ordnungsgemäß ausgeprägt und liegt noch auf voller Breite der Schweißnaht vor. Die vorhandenen Abweichungen von den vorbestimmten Werten deuten auf Schweißfehler in Form von Einbrandkerben oder in Form von Nahteinfall hin. Die Fig.3b zeigt eine typische Darstellung einer Bahnabweichung in das dicke Blech. Fig.3c stellt eine den Fig.3a,3b entsprechende Darstellung einer Bahnabweichung in das dünne Blech dar. Das Maximum 24 des vorlaufenden Maximumbereichs 10 ist voll ausgeprägt, während der hinter der Laserstrahlachse liegende Bereich 12 unterbrochen ist. Entsprechendes manifestiert sich auch in Fig.3c', wo das Maximum 24 voll ausgeprägt ist, der Bereich 12 hingegen reduzierte Helligkeit hat.

Wenn die Spaltbreite des Spalts 21 kleiner ist, als der Fokusradius, so läßt sich bei entsprechend präziser Bahnführung des Laserstrahls erreichen, daß stets beide Fügekanten angeschmolzen werden. Es sind dann grundsätzlich beide Intensitätsmaximumbereiche 10,12 vorhanden, wie Fig.4a zeigt. Diese läßt allerdings erkennen, daß fehlerhaftes Schweißen stattfindet, weil beide Bereiche 10,12 teilweise abgedunkelt sind. Fig.4b zeigt eine Darstellung mit lediglich einem einzigen zusammenhängenden Intensitätsmaximumbereich. Derartiges ist zu sehen, wenn die Breite des Spalts 21 größer ist, als der Fokusradius. In diesem Fall bleibt eine Kante eines Werkstücks völlig unangeschmolzen und eine belastbare Schweißverbindung kommt nicht zu stande.

Die Fig.5a,5b zeigen Beispiele für Durchschweißungen unterschiedlicher Qualität. Fig.5a zeigt eine gute Durchschweißung mit breiter Nahtwurzel. Der Minimumbereich 11 ist deutlich ausgeprägt. Die Durchschweißung ist sicher zu detektieren. In Fig.5b ist zwar ebenfalls eine Durchschweißung vorhanden, der dritte Bereich ist jedoch nicht ausgeprägt beziehungsweise meßtechnisch nicht erfaßbar, obwohl eine Durchschweißung vorhanden ist. Diese ist jedoch von schlechter Qualität, weil eine nur schmale Nahtwurzel ausgebildet wurde.

Fig.6 zeigt in einer einzigen Darstellung neun meßtechnisch erfaßte Bereiche 23 derselben Dampfkapillaren. Die fotografischen Aufnahmen wurden in Abständen von einer Millisekunde gemacht. Alle Bereiche 23 zeigen jeweils die deutliche Darstellung eines Minimumbereichs 11. Die fotografischen Aufnahmen 3 bis 6 zeigen darüberhinaus intensiv strahlende Lichtflecke 22, welche Spritzer darstellen, die sich infolge des Schweißverfahrens entwickelt haben.

Zusammenfassend ergibt sich: Typische Schweißfehler können in Qualität und Quantität Abweichungen der detektierten Bereiche von der oben beschriebenen idealen Form zugeschrieben werden.

Ein *Fügespalt* und Unregelmäßigkeiten in der Kantenvorbereitung können sehr deutlich erkannt werden. Dazu ist die geometrische Form des dunklen dritten Bereichs, des Minimumbereichs 11, zu beobachten. Weicht dessen Form von einer kreisähnlichen Form ab und sind scharfe Begrenzungen zu den helleren ersten und zweiten Bereichen 10,12 zu erkennen, dann liegt an diesen Orten eine vom Laserstrahl noch nicht angeschmolzene Fügekante innerhalb des Beobachtungsbereichs vor. Bei nicht zu großen Werten für den Fügespalt ist zwar schon der erste helle Bereich 10 deutlich im Bereich der Fügekante unterbrochen, aber der helle zweite Bereich 12 hinter der Laserstrahlachse 20 kann noch auf voller Breite der Schweißnaht vorliegen. Dann kann der Prozeß den Fügespalt noch überbrükken. Allerdings bewirken Abweichungen von den günstigen vorbestimmten Werten Schweißfehler in Form von Einbrandkerben oder sogar als Nahteinfall wegen zuwenig aufgeschmolzenen Materials. Bei zu großen Werten des Fügespalts ist auch der helle zweite Bereich 12 von dem dunklen dritten Bereich 11 entlang der Fügekante unterbrochen. Dann kann der Fügespalt von dem Prozeß nicht mehr überbrückt werden und die Fügefehler sind vollständig ausgebildet. Auch ein zeitliches Wechseln der beiden Zustände kann vorliegen, wenn die Breite des Fügespalts einen mittleren, aber schon kritischen Wert erreicht hat. In diesem Fall liegen sporadisch auftretende Verbindungsfehler vor, die mindestens zur Ausbildung von Einbrandkerben führen.

*Einbrandkerben*: Mit zunehmender Spaltbreite und einem gleichzeitigen Versatz zwischen der Fügekante und einer entstehenden Schweißnaht wird der hellste erste Bereich 10 asymmetrisch, bis sogar eines der räumlich getrennten Maxima 15, 16 in der Substruktur des ersten Bereichs 10 völlig fehlt. In derselben graduellen Abstufung bilden sich in der erzeugten Schweißnaht Einbrandkerben aus.

*Fehlerzuordnung*: Einbrandkerben entstehen nicht nur durch eine einzige Ursache. Neben anderen Ursachen können ein Spalt 21 und ein Versatz zur Ausbildung von Einbrandkerben führen. Mit den beschriebenen Verfahren können nicht nur die Fehler selbst erkannt werden, sondern oft auch Ihre Ursachen.

*Unregelmäßige Nahtraupen*: Bei ungünstiger Verfahrensführung kann der Prozeß zwischen zwei Zuständen zeitlich wechseln. Dieses Wechseln muß noch keinen Schweißfehler zur Folge haben, führt aber immer zur Ausbildung unerwünschter Unregelmäßigkeiten in den Nahtober- und Nahtunterraupen, oft auch schon zur Spritzerbildung.

*Spritzerbildung*: Werden die Abweichungen der aktuellen Verfahrensparameter von den günstigen Werten größer, dann sind zusätzlich zu den drei genannten Extremwertbereichen sporadisch auftretende intensiv strahlende kleine Flecke oder "hot spots" zu beobachten. Diese zusätzlich hell aufblitzenden Bereiche gehen mit einer Spritzerbildung während der Schweißung einher. Im Vergleich zu bekannten Überwachungsverfahren kann mit den hier vorgestellten Verfahren nicht nur das Auftreten von Spritzern detektiert werden sondern auch ihre Größe beziehungsweise ihr Volumen. Das Volumendefizit für die Schweißnaht ist hier von besonderer Bedeutung.

*Auswertung*: Da die Zuordnung von einfachen geometrischen Formen und relativen Helligkeitswerten des detektierten Bildes den Schweißfehlern verläßlich zugeordnet werden können, kann zu ihrer Auswertung eine automatisierte Bildverarbeitung eingesetzt werden. In Frage kommen neuronale Netze, Fuzzy Logic etc.

Mit den vorbeschriebenen Verfahren lassen sich technisch relevante Bearbeitungsmerkmale beim Schweißen zuverlässig überwachen. Diese Merkmale sind:
- die Eindringtiefe der Dampfkapillaren, um die minimale/maximale Einschweißtiefe einhalten zu können,
- die Fläche der Dampfkapillaren an der Oberseite des Werkstücks, um eine ausreichende Überdeckung des Fügespalts durch die Schweißnaht zu gewährleisten,
- die Breite der Dampfkapillaren in einer vorbestimmten Tiefe, um den notwendigen tragenden Querschnitt einer Schweißverbindung nicht zu unterschreiten,
- die Fläche der Dampfkapillaren an der Unterseite der zu verschweißenden Werkstücke, um die sichere Durchschweißung aufrecht erhalten zu können und um sogar einen vorbestimmten Wert für die Wurzelbreite der Schweißnaht zu erreichen,
- die laterale Spaltbreite zwischen zwei horizontal nebeneinander angeordneten Werkstücken entlang der Schweißrichtung muß verfolgt werden, um eine sichere Spaltüberbrückung beim Schweißen eines Stumpfstoßes zu überwachen,
- die Form der Fügekante am Ort der Dampfkapillaren, um den Einfluß von Unregelmäßigkeiten in der Kantenvorbereitung auf das Schweißergebnis zuordnen zu können. Dies ist eine zusätzliche Frage der Schweißfehlerzuordnung, um die Ursache für die Schweißfehler zu erkennen und
- die zeitliche Stabilität der Dampfkapillaren, um die Tropfen- beziehungsweise Spritzerbildung und deren Ursachen zu erkennen.

Darüberhinaus sind die vorbeschriebenen Verfahren insbesondere beim Verschweißen von dünnen, ungleichen Werkstücken geeignet, den sogenannten tailored blanks. Es ergeben sich zahlreiche Einsatzvarianten, nämlich überall dort, wo die Schweißtiefe in der Größenordnung der Nahtbreite liegt und die Durchschweißung oder die Nahtbreite sicher erkannt werden müssen. Insbesondere beim Laserstrahlschweißen von Karosseriebauteilen in der Automobil- und der Zulieferindustrie zum Beispiel bei der Herstellung von tailored blanks mit beliebigen Konturen sind die vorbeschriebenen Verfahren zu verwenden. Diese können darüber hinaus im Apparatebau für die Elektroindustrie oder für die chemische Industrie und bei der Rohrfertigung verwendet werden.

Bei einer Integration der Meßeinrichtung in den Strahlengang der Bearbeitungsanlage ist ein unproblematischer Einsatz der Verfahren überall dort möglich, wo eine Laserbearbeitung durchführbar ist. Das Verfahren ist nicht durch die Wahl der Nahtart beschränkt und kann beispielsweise auch zur Überwachung von Dichtschweißungen an Überlappnähten verwendet werden.

## Patentansprüche

1. Verfahren zur Materialbearbeitung mit Plasma induzierender Hochenergiestrahlung, insbesondere Laserstrahlung, bei dem die momentane Intensität der Plasmastrahlung an mehreren Stellen einer Dampfkapillaren gemessen wird, **dadurch gekennzeichnet, daß** Formen zweier voneinander distanzierter Intensitätsmaximumbereiche (10,12) der Plasmastrahlung, oder einer anderen aus der Dampfkapillaren emittierten elektromagnetischen Strahlung, und eines zwischen diesen beiden Extremwertbereichen ausbildbaren Minimumbereichs (11) meßtechnisch erfaßt werden, daß meßtechnisch erfaßte Formen der Extremwertbereiche mit vorbestimmten Bereichsformen verglichen werden, und daß eine Steuerung der Materialbearbeitung in Abhängigkeit von Abweichungen der erfaßten Formen von den vorbestimmten Bereichsformen erfolgt.

2. Verfahren nach Anspruch 1, **dadurch gekennzeichnet, daß** eine Steuerung der Materialbearbeitung bei einer Abweichung der Form des Minimumbereichs (11) von einer vorbestimmten kreisähnlichen Bereichsform erfolgt.

3. Verfahren nach Anspruch 1 oder 2, **dadurch gekennzeichnet, daß** eine Steuerung der Materialbearbeitung erfolgt, wenn in den Übergangsbereichen (10',12') der Form des Minimumbereichs (11) zu den Formen der Maximumbereiche (10,12) scharfe Bereichsgrenzen vorhanden sind.

4. Verfahren nach einem oder mehreren der Ansprüche 1 bis 3, **dadurch gekennzeichnet, daß** eine Steuerung der Materialbearbeitung bei einer Abweichung einer Form eines Bereichs der drei Extremwertbereiche von einer vorbestimmten Bereichsform erfolgt.

5. Verfahren nach einem oder mehreren der Ansprüche 1 bis 4, **dadurch gekennzeichnet, daß** eine Steuerung der Materialbearbeitung erfolgt, wenn Abweichungen der Formen eines in Vorschubrichtung (14) eines relativ zur Laserstrahlung bewegten Werkstücks vorlaufenden Intensitätsmaximumbereichs (10) und des nachlaufenden Maximumbereichs (12) von vorbestimmten Bereichsformen vorliegen.

6. Verfahren nach einem oder mehreren der Ansprüche 1 bis 5, **dadurch gekennzeichnet, daß** eine Steuerung der Materialbearbeitung erfolgt, wenn die Formabweichung eine vorbestimmte Differenzgröße und/oder eine vorbestimmte Dauer überschreitet.

7. Verfahren nach einem oder mehreren der Ansprüche 1 bis 6, **dadurch gekennzeichnet, daß** eine Steuerung der Materialbearbeitung in Abhängigkeit von Winkelstellungen erfolgt, die eine durch die Intensitätsmaximumbereiche (10,12) gelegte Gerade (13) in Bezug auf eine Vorschubrichtung (14) eines relativ zur Laserstrahlung bewegten bearbeiteten Werkstücks einnimmt.

8. Verfahren nach einem oder mehreren der Ansprüche 1 bis 7, **dadurch gekennzeichnet, daß** eine Steuerung der Materialbearbeitung erfolgt, wenn in einem die Formen der Extremwertbereiche meßtechnisch erfassenden Meßbereich sporadisch auftretende, intensiv strahlende Lichtflecke (22) ermittelt werden.

9. Verfahren nach einem oder mehreren der Ansprüche 1 bis 8, **dadurch gekennzeichnet, daß** eine Steuerung der Materialbearbeitung unterschiedlich dicker Werkstücke erfolgt, wenn der Minimumbereich (11) den in Vorschubrichtung vorlaufenden und/oder den nachlaufenden Maximumbereich (10,12) verformt.

10. Verfahren nach einem oder mehreren der Ansprüche 1 bis 9, **dadurch gekennzeichnet, daß** eine Steuerung der Materialbearbeitung erfolgt, wenn innerhalb eines in Vorschubrichtung vorlaufenden Maximumbereichs (10) zwei beidseitig einer Fügebahn vorhandene Submaxima (15,16) von einer vorbestimmten Symmetrie abweichen.

## Claims

1. Method for material processing using plasma-inducing high-energy radiation, in particular laser radiation, wherein the momentary intensity of the plasma radiation is measured at a plurality of locations on a steam capillary, **characterised in that** shapes of two mutually distant regions of maximum intensity (10, 12) of the plasma radiation, or of other electromagnetic radiation emitted from the steam capillary, and of a minimum region (11) which can be formed between these two extreme value regions are detected by a measuring technique, that shapes of the extreme value regions, which shapes are detected by a measuring technique, are compared with predetermined region shapes, and that the material processing is controlled in dependence upon deviations of the detected shapes from the predetermined region shapes.

2. Method as claimed in claim 1, **characterised in that** in the event that the shape of the minimum region (11) deviates from a predetermined circle-like region shape, the material processing is subject to control.

3. Method as claimed in claim 1 or 2, **characterised in that** if sharp region boundaries exist in the transition regions (10', 12') from the shape of the minimum region (11) to the shapes of the maximum regions (10, 12), the material processing is subject to control.

4. Method as claimed in any one or several of claims 1 to 3, **characterised in that** in the event that a shape of one region of the three extreme value regions deviates from a predetermined region shape, the material processing is subject to control.

5. Method as claimed in any one or several of claims 1 to 4, **characterised in that** if deviations exist in the shapes of a region of maximum intensity (10), which leads in the direction of advance (14) of a work piece moved relative to the laser radiation, and of the following maximum region (12) from predetermined region shapes, the material processing is subject to control.

6. Method as claimed in any one or several of claims 1 to 5, **characterised in that** if the shape deviation exceeds a predetermined extent of difference and/or a predetermined duration, the material processing is subject to control.

7. Method as claimed in any one or several of claims 1 to 6, **characterised in that** the material processing is controlled in dependence upon angular positions which a straight line (13) placed through the regions of maximum intensity (10, 12) assumes with respect to a direction of advance (14) of a processed work piece moved relative to the laser radiation.

8. Method as claimed in any one or several of claims 1 to 7, **characterised in that** if, in a measuring region detecting the shapes of the extreme value regions by a measuring technique, sporadically occurring, intensively radiating luminous spots (22) are detected, the material processing is subject to control.

9. Method as claimed in any one or several of claims 1 to 8, **characterised in that** if the minimum region (11) deforms the maximum region (10, 12) which leads and/or follows in the direction of advance, the material processing of work pieces of different thickness is subject to control.

10. Method as claimed in any one or several of claims 1 to 9, **characterised in that** if, within a maximum region (10) which leads in the direction of advance, two submaxima (15, 16) provided on both sides of a joint path deviate from a predetermined symmetry, the material processing is subject to control.

## Revendications

1. Procédé pour l'usinage de matière avec un rayonnement à haute énergie induisant un plasma, en particulier un rayonnement laser, selon lequel l'intensité momentanée du rayonnement de plasma est mesurée à plusieurs endroits d'un capillaire de vapeur, **caractérisé en ce que** les formes de deux zones maximales d'intensité (10, 12) du rayonnement de plasma qui sont espacées l'une de l'autre, ou d'un autre rayonnement électromagnétique émis à partir du capillaire de vapeur, et d'une zone minimale (11) apte à être formée entre ces deux zones de valeurs extrêmes sont relevées à l'aide d'une technique de mesure, **en ce que** des formes, relevées à l'aide d'une technique de mesure, des zones de valeurs extrêmes sont comparées à des formes de zones prédéfinies, et **en ce qu'**une commande de l'usinage de matière a lieu en fonction des écarts entre les formes relevées et les formes de zones prédéfinies.

2. Procédé selon la revendication 1, **caractérisé en ce qu'**une commande de l'usinage de matière a lieu en cas d'écart entre la forme de la zone minimale (11) et une forme de zone de type circulaire prédéfinie.

3. Procédé selon la revendication 1 ou 2, **caractérisé en ce qu'**une commande de l'usinage de matière a lieu s'il y a des limites de zones nettes dans les zones de transition (10', 12') entre la forme de la zone minimale (11) et les formes des zones maximales (10, 12).

4. Procédé selon l'une au moins des revendications 1 à 3, **caractérisé en ce qu'**une commande de l'usinage de matière a lieu en cas d'écart entre une forme de l'une des trois zones de valeurs extrêmes et une forme de zone prédéfinie.

5. Procédé selon l'une au moins des revendications 1 à 4, **caractérisé en ce qu'**une commande de l'usinage de matière a lieu s'il y a des écarts entre les formes d'une zone maximale d'intensité (10) située en avant, dans le sens d'avance (14), d'une pièce déplacée par rapport au rayonnement laser, et de la zone maximale (12) située en arrière, et des formes de zones prédéfinies.

6. Procédé selon l'une au moins des revendications 1 à 5, **caractérisé en ce qu'**une commande de l'usinage de matière a lieu si l'écart de forme dépasse une valeur de différence prédéfinie et/ou une durée prédéfinie.

7. Procédé selon l'une au moins des revendications 1 à 6, **caractérisé en ce qu'**une commande de l'usinage de matière a lieu en fonction de positions angulaires qu'adopte une droite (13) traversant les zones maximales d'intensité (10, 12) par rapport à un sens d'avance (14) d'une pièce usinée qui est déplacée par rapport au rayonnement laser.

8. Procédé selon l'une au moins des revendications 1 à 7, **caractérisé en ce qu'**une commande de l'usinage de matière a lieu si on détecte, dans une zone de mesure relevant à l'aide d'une technique de mesure les zones de valeurs extrêmes, des taches de lumière (22) à rayonnement intensif qui apparaissent sporadiquement.

9. Procédé selon l'une au moins des revendications 1 à 8, **caractérisé en ce qu'**une commande de l'usinage de matière sur des pièces d'épaisseurs différentes a lieu si la zone minimale (11) déforme la zone maximale (10, 12) située en avant et/ou en arrière dans le sens d'avance.

10. Procédé selon l'une au moins des revendications 1 à 9, **caractérisé en ce qu'**une commande de l'usinage de matière a lieu si, à l'intérieur d'une zone maximale (10) située en avant dans le sens d'avance, deux sous-maximums (15, 16) présents des deux côtés d'une bande de joint s'écartent d'une symétrie prédéfinie.
